# EUROPÄISCHE PATENTSCHRIFT

(11) **EP 3 084 277 B1**
(45) Veröffentlichungstag und Bekanntmachung des Hinweises auf die Patenterteilung: **08.01.2020**
(21) Anmeldenummer: 14799343.0
(22) Anmeldetag: 12.11.2014
(51) Int. Cl.: F16K 31/122, F16K 31/143, F16K 11/07

(54) **HYDRAULISCHE VENTILEINRICHTUNG**
HYDRAULIC VALVE DEVICE
DISPOSITIF DE VANNE HYDRAULIQUE

(30) Priorität: 16.12.2013 DE 102013021317
(43) Veröffentlichungstag der Anmeldung: 26.10.2016
(73) Patentinhaber: Hydac Filtertechnik GmbH, 66280 Sulzbach/Saar (DE)
(72) Erfinder: BIWERSI, Sascha, Alexander, 66693 Mettlach (DE); STÖNNER, Christoph, 66386 St. Ingbert (DE)
(74) Vertreter: Bartels und Partner, Patentanwälte
(86) Internationale Anmeldenummer: PCT/EP2014/003032
(87) Internationale Veröffentlichungsnummer: WO 2015/090493

(56) Entgegenhaltungen:
- WO-A1-98/05870
- WO-A1-2010/063515
- DE-A1- 3 135 109
- DE-B1- 1 550 295
- US-A1- 2004 238 051
- US-A1- 2013 168 580

## Beschreibung

Die Erfindung betrifft eine hydraulische Ventileinrichtung, vorzugsweise ein LS-Wegeventil, mit den Merkmalen im Oberbegriff von Anspruch 1.

Ventileinrichtungen dieser Art kommen verbreitet zum Einsatz, um hydraulische Aktuatoren anzusteuern. Verstellbare Hubanschläge haben hierbei die Aufgabe, den maximalen Volumenstrom einer Ventilsektion und damit die maximale Geschwindigkeit einer Arbeitsfunktion zu begrenzen, beispielsweise die Fahrbewegung des Kolbens eines Arbeitszylinders oder die Arbeitsgeschwindigkeit eines anderen Aktuators. Für eine entsprechende Hublängenbegrenzung ist es Stand der Technik, an beiden axialen Endbereichen, bezogen auf die Achse der Verfahrbewegungen der Steuereinrichtung, jeweils einen einstellbaren Endanschlag vorzusehen, der mit der Steuereinrichtung oder Teilen zusammenwirkt, die mit der Steuereinrichtung in Wirkverbindung stehen. Beispielsweise zeigt das Dokument WO 98/05870 eirie derartige Lösung, bei der jeder Endanschlag auf einen Messkolben am einen bzw. anderen Ende eines Steuerschiebers einwirkt. Derartige Lösungen sind insofern nachteilig, als beide Seiten der Gehäuseanordnung der Ventileinrichtungen für die Vornahme von Einstellmaßnahmen an den Endanschlägen zugänglich sein müssen. Bei vielen Einbausituationen ist ein freier und ungehinderter Zugang nur an einer Seite möglich. Bei mittels Handhebel betätigbaren Ventileinrichtungen ist dies in der Regel auf der Handhebelseite der Fall. Bei handhebelbetätigbaren Ventileinrichtungen bietet der Stand der Technik als weitere Lösung für die Einstellproblematik die Möglichkeit, die Einstellung für beide Endanschläge von der Handhebelseite aus vorzunehmen. Bei dieser Lösung wirkt ein Endanschlag unmittelbar auf den Steuerschieber der Steuereinrichtung ein. Der zweite Endanschlag wirkt auf die Handhebeleinrichtung ein, um diese auf eine Hebel-Endstellung zu begrenzen. Da die Einstellung somit lediglich indirekt, nämlich über die Mechanik der Handhebeleinrichtung, auf den Steuerschieber einwirkt, arbeitet die Anschlageinrichtung aufgrund des Spiels, die der Reibung und Verformung der Einstellmechanik sehr ungenau. Wegen der unvorteilhaft übersetzten Betätigungskräfte ergeben sich auch Verformungen der Mechanik und eine weitere Beeinträchtigung der Einstellgenauigkeit.

Die US 2013/0168580 A1 beschreibt eine hydraulische Ventileinrichtung mit an einer Gehäuseanordnung vorgesehenen Fluidanschlüssen, wie zumindest einem Druckversorgungsanschluss und zumindest einem Nutzanschluss, und mit einer Steuereinrichtung, die für ein zumindest teilweises Ansteuern von Fluidanschlüssen der Gehäuseanordnung in der einen oder anderen Bewegungsrichtung verfahrbar ist, wobei eine die Hublänge der Verfahrbewegungen der Steuereinrichtung oder von Teilen derselben in der einen Richtung und in der anderen Richtung begrenzende, einstellbare Anschlageinrichtung vorhanden ist, wobei die Anschlageinrichtung am gleichen axialen Endbereich eines Schieberkolbens der Steuereinrichtung eine der einen Bewegungsrichtung zugewandte Anschlagfläche und eine der anderen Bewegungsrichtung zugewandte zweite Anschlagfläche aufweist, wobei für jede Anschlagfläche ein Gegenanschlag vorgesehen ist, die beide an dem betreffenden, gleichen Endbereich der Gehäuseanordnung angeordnet sind, und wobei eine Anschlagfläche an der Stirnfläche des betreffenden axialen Endes des Schieberkolbens gebildet ist.

Im Hinblick auf diese Problematik stellt sich die Erfindung die Aufgabe, eine Ventileinrichtung der eingangs genannten Gattung zur Verfügung zu stellen, die eine bequeme, sichere und genaue Einstellung der Anschlageinrichtung ermöglicht.

Erfindungsgemäß ist die Aufgabe durch eine hydraulische Ventileinrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass die Gegenanschläge lageeinstellbar sind und dass der Gegenanschlag für die an der Stirnfläche des Schieberkolbens befindliche Anschlagfläche an einer Stellschraube gebildet ist, die sich im zugeordneten Endteil der Gehäuseanordnung parallel zur Verfahrachse erstreckt und von der Gehäuseaußenseite her zugänglich ist.

Es ist vorgesehen, dass die Anschlageinrichtung am gleichen axialen Endbereich eines Schieberkolbens der Steuereinrichtung eine der einen Bewegungsrichtung zugewandte Anschlagfläche und eine der anderen Bewegungsrichtung zugewandte zweite Anschlagfläche aufweist, wobei für jede Anschlagfläche ein Gegenanschlag vorgesehen ist, die beide an dem betreffenden, gleichen Endbereich der Gehäuseanordnung lageeinstellbar angeordnet sind. Dadurch sind nicht nur beide Gegenanschläge von einer Gehäuseseite her zugänglich, sondern sie wirken auch unmittelbar, d.h. ohne mechanische Zwischenglieder, auf den Steuerschieber ein. Die Gegenanschläge werden daher nur auf Zug oder Druck belastet, so dass es weder zu wahrnehmbaren Verformungen noch zu Festigkeitsproblemen kommt. Die Anschlageinrichtung ist daher nicht nur einfach und bequem einstellbar, sondern gewährleistet auch eine hohe Einstellgenauigkeit.

Die eine Anschlagfläche ist unmittelbar an der Stirnfläche des betreffenden axialen Endes des Schieberkolbens gebildet.

Für die Ausbildung der zweiten Anschlagfläche ist bei besonders vorteilhaften Ausführungsbeispielen am Schieberkolben an dem betreffenden axialen Endbereich eine Vertiefung vorgesehen, wobei die zweite Anschlagfläche durch eine zwischen dem Grund der Vertiefung und dem Außenumfang des Schieberkolbens verlaufende Wandfläche der Vertiefung gebildet ist, so dass am gleichen axialen Endbereich des Schieberkolbens für jede Richtung der Verfahrbewegungen eine Anschlagfläche zur Verfügung steht.

Hinsichtlich des verstellbaren Gegenanschlags für die zweite Anschlagfläche kann die Anordnung in vorteilhafter Weise derart getroffen sein, dass dieser Gegenanschlag durch eine Stufenfläche zwischen dem Schaft einer zweiten Stellschraube und deren für den Eingriff in die Vertiefung vorgesehenen, radial erweiterten Kopfteil gebildet ist.

Bei besonders vorteilhaften Ausführungsbeispielen ist die zweite Stellschraube parallel zur Verfahrachse im zugeordneten Endbereich der Gehäuseanordnung neben der ersten Stellschraube angeordnet und wie diese von der Gehäuseaußenseite her zugänglich. Bei dieser Positionierung der zweiten Stellschraube kann die Vertiefung des Schieberkolbens, die mit einer Wandfläche die zweite Anschlagfläche bildet, durch eine Längsnut ausgebildet sein, die sich im Schieberkolben entlang der Verfahrachse erstreckt.

Bei einer derartigen Gestaltung der Anschlageinrichtung befindet sich im Betriebszustand das Kopfteil der zweiten Stellschraube innerhalb der Längsnut des Schieberkolbens, wobei der Schaft das geschlossene Ende der Längsnut übergreift. Bei dieser Konfiguration kann die Montage und Demontage über eine Drehung des Schieberkolbens erfolgen. Hierfür kann die Anordnung mit Vorteil so getroffen sein, dass im Schieberkolben eine Quernut ausgebildet ist, die in die Längsnut derart einmündet, dass die Quernut bei Drehung des Schieberkolbens für das Kopfteil der zweiten Stellschraube einen Ausgang aus der Längsnut bildet, wobei eine Unterbrechung der Wand der Quernut einen zur Stirnfläche des Schieberkolbens führenden weiteren Ausgang für das Kopfteil der zweiten Stellschraube bildet. Die Quernut kann derart positioniert sein, dass das Kopfteil für das Eintauchen in die oder das Austauchen aus der Längsnut auf diese ausrichtbar ist, wenn der Schieberkolben in einer Axialposition gedreht wird, die sich außerhalb des betrieblichen Arbeitshubbereichs befindet. Die Unterbrechung der Wand der Quernut befindet sich, in Umfangsrichtung des Schieberkolbens versetzt, in solcher Position, dass bei dieser Montage-Drehposition des Schieberkolbens das Kopfteil die Quernut in Axialrichtung verlassen kann.

Die Unterbrechung der Wand der Quernut kann in der Weise ausgebildet sein, dass am Schieberkolben eine ebene, entlang einer Sehne am Umfang des Schieberkolbens verlaufende Abschrägung vorgesehen ist.

Bei Ausführungsbeispielen der Ventileinrichtung, bei denen eine Handbetätigung vorgesehen ist, kann die Anordnung mit besonderem Vorteil so getroffen sein, dass im Schieberkolben eine vom Boden der Quernut aus sich radial nach innen erstreckende Ausnehmung für den Eingriff eines Mitnehmerelements einer Einrichtung zur manuellen Erzeugung von Verfahrbewegungen vorgesehen ist.

Weiterhin kann bei besonders vorteilhaften Ausführungsbeispielen an der Gehäuseanordnung eine Führungseinrichtung für den Schieberkolben derart angeordnet sein, dass sie diesen lediglich bei Axialpositionen, die dem betrieblichen Arbeitshubbereich entsprechen, gegen Rotation sichert, jedoch außerhalb dieses Arbeitshubbereichs den Schieberkolben für Drehungen in die Montage-Drehpositionen freigibt.

Nachstehend ist die Erfindung anhand eines in der Zeichnung dargestellten Ausführungsbeispiels im Einzelnen erläutert. Es zeigen:
- Fig. 1: einen abgebrochenen, die Gehäuseanordnung nur teilweise zeigenden Längsschnitt eines Ausführungsbeispiels der erfindungsgemäßen Ventileinrichtung;
- Fig. 2: eine Schnittdarstellung, entsprechend der Schnittlinie II-II von Fig. 1;
- Fig. 3: einen Teillängsschnitt eines axialen Endbereichs der Gehäuseanordnung des Ausführungsbeispiels; und
- Fig. 4: eine in größerem Maßstab gezeichnete perspektivische Schrägansicht eines Teils des die Anschlageinrichtung aufweisenden Endbereichs der Gehäuseanordnung des Ausführungsbeispiels.

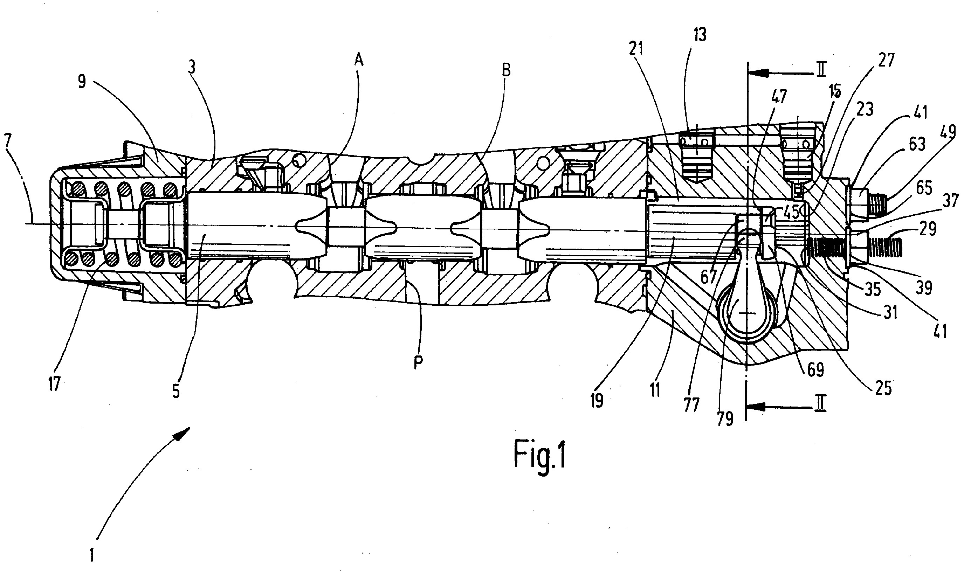

Unter Bezug auf die Zeichnung wird die erfindungsgemäße Ventileinrichtung am Beispiel eines LS-Wegeventils erläutert. Von der Gehäuseanordnung 1 sind in Fig. 1 lediglich die mit der hydraulischen Steuereinrichtung funktionsmäßig zusammenwirkenden Gehäusehauptteile gezeigt, nämlich ein Steuergehäuse 3, in dem ein Steuerkolben 5 der Steuereinrichtung entlang einer Achse 7 verfahrbar ist, sowie Gehäuseendbereiche 9 und 11, die das Steuergehäuse 3 an beiden axialen Enden abschließen. Am Steuergehäuse 3 befinden sich die bei derartigen Ventileinrichtungen üblichen Gehäuseanschlüsse, wie ein Druckversorgungsanschluss P, zwei Nutzanschlüsse A und B. Weitere Anschlüsse, wie Tank-Rücklaufanschlüsse oder Anschlüsse z.B. für eine Druckwaage, sind in Fig. 1 nicht beziffert. Der Steuerkolben 5 der Steuereinrichtung als solcher ist in bekannter und daher nicht näher zu beschreibender Art und Weise von üblichen, elektromagnetisch betätigbaren Pilotventilen 13 und 15 ansteuerbar. Eine im Gehäuseendbereich 9 befindliche Federanordnung 17 gibt in der bei derartigen Wegeventilen üblichen Weise für den Steuerkolben 5 eine Neutral- oder Mittelstellung vor. Da die Ventilfunktion insoweit dem Stand der Technik entspricht, richtet sich die nachstehende Beschreibung lediglich auf den in Fig. 1 rechtsseitig gelegenen axialen Endbereich 11, der die Anschlageinrichtung für die Hublängenbegrenzung des Steuerkolbens 5 und dessen axiales Endteil 19 enthält.

Dieser Gehäuse-Endbereich 11 ist mit dem Steuergehäuse 3 der mehrteiligen Gehäuseanordnung 1 abgedichtet verbunden und weist einen inneren, sich entlang der Verfahrachse 7 erstreckenden, zylindrischen Druckraum 21 auf, in den sich das Endteil 19 des Schieberkolbens 5 erstreckt. Der Innendurchmesser des Druckraums 21 ist größer als der Außendurchmesser des Endteils 19 des Steuerkolbens 5 und besitzt eine derartige axiale Länge, dass sich das geschlossene Ende 23 außerhalb des betrieblichen Arbeitshubbereichs des Steuerkolbens 5 befindet, und dieser daher bei äußerster Annäherung an das Ende 23 mit seiner axialen Stirnfläche 25 außer Berührung mit dem Ende 23 des Druckraums 21 ist. Vom Pilotventil 15 mündet eine Verbindung 27 in der Nähe des Endes 23 in den Druckraum 21 ein.

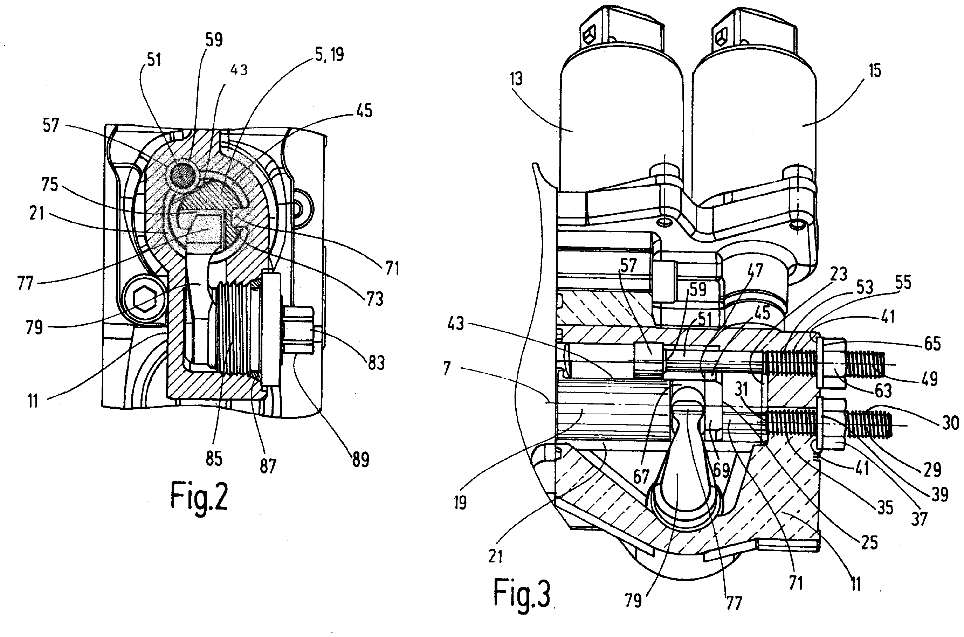

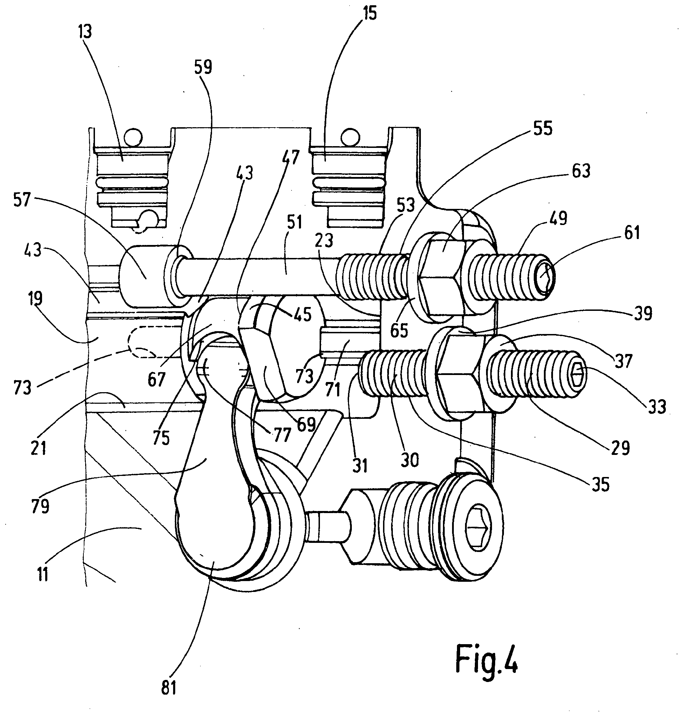

Die näheren Einzelheiten der einstellbaren Anschlageinrichtung sind aus den Fig. 2 bis 4 deutlich entnehmbar, die den Gehäuseendbereich 11 in gesonderter Darstellung zeigen. Die Anschlagflächen, die in Zusammenwirkung mit den zugeordneten Gegenanschlägen der einstellbaren Anschlageinrichtung die Hublängen der Verfahrbewegungen des Steuerkolbens 5 in der einen oder anderen Bewegungsrichtung begrenzen, sind beide am Endteil 19 des Schieberkolbens 5 ausgebildet. Die erste Anschlagfläche, die die Hubbewegung des Schieberkolbens 5 in Richtung auf das Ende 23 des Raums 21 begrenzt, ist durch die Stirnfläche 25 des Schieberkolbens 5 gebildet, die die Form einer Radialebene besitzt. Als einstellbarer Gegenanschlag für die Stirnfläche 25 ist eine Stellschraube 29 in Form eines Gewindebolzens vorgesehen, dessen Schaft 30 mit seinem einen Ende 31 den Gegenanschlag für die Stirnfläche 25 als Anschlagfläche des Steuerkolbens 5 bildet. Das andere, äußere Ende des Schaftes 30 ist mit einem Innensechskant 33 versehen. Die Stellschraube 29 durchgreift eine Gewindebohrung 35, die sich, zur Verfahrachse 7 eng benachbart, im Gehäuse-Endbereich 11 achsparallel erstreckt. Die durch Einsetzen eines Einstell-Drehwerkzeugs am Innensechskant 33 zur Positionseinstellung, d.h. zur Hublängenbegrenzung, drehbare Stellschraube 29 ist in der jeweiligen Einstellposition mittels einer Bundmutter 37 mit Dichtfunktion sicherbar, die sich mit ihrem flanschartig erweiterten Bund 39 an der Außenseite des Gehäuse-Endbereichs 11 abstützt, wobei der Bund 39 in einer flachen Vertiefung 41 sitzt.

Die der Stirnfläche 25 als erste Anschlagfläche entgegengesetzte zweite Anschlagfläche ist am Endteil 19 des Schieberkolbens 5 in geringem axialen Abstand von der Stirnfläche 25 ausgebildet. Hierfür weist das Endteil 19 eine spezielle Formgebung auf, die insbesondere aus den Fig. 2 bis 4 ersichtlich ist. Hierfür ist im Endteil 19 eine Vertiefung in Form einer in den Umfang des Endteils 19 des Steuerkolbens 5 eingearbeiteten Längsnut 43 ausgebildet, die sich achsparallel annähernd über die gesamte axiale Länge des Endteils 19 in Richtung auf die Stirnfläche 25 erstreckt, jedoch in einem Abstand von dieser endet, so dass zwischen Stirnfläche 25 und der Längsnut 43 ein unvertiefter Bereich 45 verbleibt, der innenseitig eine Wandfläche 47 als axiale Begrenzung der Längsnut 43 bildet. Diese Wandfläche 47 dient als zweite Anschlagfläche der einstellbaren Anschlageinrichtung.

Als lageeinstellbarer Gegenanschlag für die Wandfläche 47 der Längsnut 43 als der zweiten Anschlagfläche ist eine zweite Stellschraube 49 vorgesehen, deren Schaft 51 mit seinem Gewindeabschnitt 53 eine Gewindebohrung 55 im Gehäuse-Endbereich 11 durchgreift, die sich achsparallel in einem solchen Abstand von der Verfahrachse 7 erstreckt, dass der Schaft 51 den unvertieften Bereich 45 des Endteils19 übergreift, der radial erweiterte Kopf 57 jedoch in die vertiefte Längsnut 43 eingreift. Bei dieser Lageanordnung bildet der Kopf 57 mit der zwischen ihm und dem Schaft 51 befindlichen Stufenfläche 59 den zweiten Gegenanschlag für die Zusammenwirkung mit der Wandfläche 47 am Ende der Längsnut 43 als der zweiten Anschlagfläche. Wie bei der ersten Stellschraube 29 ist auch die zweite Stellschraube 49 mit einem endseitigen Innensechskant 61 für eine bequeme Einstelldrehung versehen. In gleicher Weise wie bei der ersten Stellschraube 29 ist eine Bundmutter 63 zum Feststellen der Einstellposition vorgesehen, deren radial erweiterter Bund 65 in gleicher Weise wie der Bund 39 der anderen Mutter 37 in einer Vertiefung 41 des Gehäuse-Endbereichs 11 sitzt.

Da bei der vorliegenden Konfiguration die zweite Stellschraube 49 den unvertieften Bereich 45 des Endteils 19 zwar mit ihrem Schaft 51, nicht jedoch mit dem radial erweiterten Kopf 57 übergreifen kann, ist für Montage/Demontage-Vorgänge für den Schraubenkopf 57 ein Ausgang vorgesehen, über den der Schraubenkopf 57 sowohl den Bereich der Längsnut 43 verlassen kann als auch vom Endteil 19 des Schieberkolbens 5 freikommen kann. Hierfür ist eine zweite Vertiefung in Form einer Quernut 67 vorgesehen, die, unmittelbar an die endseitige Wandfläche 47 der Längsnut 43 angrenzend, in diese einmündet, wobei der Boden der Quernut 67 die gleiche radiale Tiefe im Endteil 19 besitzt wie der Boden der Längsnut 43. Die axiale Breite der Quernut 67 ist an die axiale Länge des Kopfes 57 angepasst, so dass dieser in die Quernut 67 gelangen kann, wenn der Schieberkolben 5 aus der in den Figuren gezeigten Drehposition entsprechend weit verdreht wird. Damit der Kopf 57 bei einer entsprechenden Verdrehung, bei der er den Bereich der Längsnut 43 verlassen hat, vom Endteil 19 vollständig freikommt, weist die Quernut 67 im gegenüber der Wandfläche 47 der Längsnut 43 versetzten Umfangsbereich eine Abschrägung 69 auf, die eine Wandunterbrechung der Quernut 67 bildet, durch die der Umfang des Endteils 19 gegenüber dem unvertieften Bereich 45 derart radial vertieft ist, dass der Kopf 57 bei entsprechender axialer Verschiebung des Endteils 19 von diesem freikommt.

Während für Montage/Demontage eine Drehbewegung des Steuerkolbens 5 vorgesehen ist, sollte der Schieberkolben 5 im Betrieb nicht drehbeweglich sein. Hierfür ist am Gehäuse-Endbereich 11 eine in den Druckraum 21 vorspringende, achsparallele Führungsrippe 71 vorgesehen, die für den Eingriff in eine zugeordnete axiale Führungsnut 73 im Endteil 19 vorgesehen ist. Dabei ist die axiale Länge der Rippe 71 derart gewählt, dass sie lediglich im normalen betrieblichen Arbeitshubbereich in die Führungsnut 73 eingreift, so dass der Schieberkolben 5 in für Montage/Demontage vorgesehenen Axialpositionen außer Eingriff mit der Führungsrippe 71 und daher drehbar ist.

Bei dem vorliegenden Ausführungsbeispiel ist eine Einrichtung für eine Betätigung mittels Handhebels vorgesehen. Zu diesem Zweck ist im Endteil 19 in den Boden der Quernut 67 eine weitere, sich radial erstreckende Vertiefung 75 eingearbeitet. Mit dieser ist ein gerundeter Mitnehmerkopf 77 am Ende eines Schwenkhebels 79 in Eingriff bringbar, der mittels eines in der Zeichnung nicht dargestellten Handhebels um eine Schwenkachse 81 schwenkbar ist. Dabei ist die Schwenkmöglichkeit derart bemessen, dass der Mitnehmerkopf 77 bei vollständig entgegen dem Uhrzeigersinn geschwenkter Position des Schwenkhebels 79 und entsprechender Axialposition des Endteils 19 in die Vertiefung 75 eintreten kann, jedoch bei dem betrieblichen Arbeitshubbereich entsprechenden Axialpositionen die Vertiefung 75 nicht verlassen kann. Wie Fig. 2 zeigt, befindet sich der Schwenkhebel 79 am Ende eines Zapfens 83, der sich in einer abgedichteten, in den Gehäuse-Endbereich 11 eingeschraubten Durchführung 85 befindet, die außenseitig mittels eines Dichtelements 87 gegenüber dem Endbereich 11 abgedichtet ist. Ein auf einem Außensechskant 89 des Zapfens 83 sitzender Handhebel für die manuelle Drehbetätigung ist in Fig. 2 weggelassen.

Während das vorliegende Ausführungsbeispiel ein LS-Wegeventil betrifft, versteht es sich, dass die erfindungsgemäße einstellbare Anschlageinrichtung gleichermaßen für andersartige Ventileinrichtungen mit Vorteil einsetzbar ist, bei denen eine Hublängenbegrenzung der hydraulischen Steuereinrichtung wünschenswert oder erforderlich ist.

## Patentansprüche

1. Hydraulische Ventileinrichtung, insbesondere LS-Wegeventil, mit an einer Gehäuseanordnung (1) vorgesehenen Fluidanschlüssen, wie zumindest einem Druckversorgungsanschluss (P), zumindest einem Nutzanschluss (A, B) und vorzugsweise einem Lastmeldeanschluss, und mit einer Steuereinrichtung (5), die für ein zumindest teilweises Ansteuern von Fluidanschlüssen der Gehäuseanordnung (1) in der einen oder anderen Bewegungsrichtung verfahrbar ist, wobei eine die Hublänge der Verfahrbewegungen der Steuereinrichtung (5) oder von Teilen derselben in der einen Richtung und in der anderen Richtung begrenzende, einstellbare Anschlageinrichtung (25, 31, 47, 59) vorhanden ist, wobei die Anschlageinrichtung (25, 31, 47, 59) am gleichen axialen Endbereich (19) eines Schieberkolbens (5) der Steuereinrichtung eine der einen Bewegungsrichtung zugewandte Anschlagfläche (25) und eine der anderen Bewegungsrichtung zugewandte zweite Anschlagfläche (47) aufweist, wobei für jede Anschlagfläche (25, 47) ein Gegenanschlag (31, 59) vorgesehen ist, die beide an dem betreffenden, gleichen Endbereich (11) der Gehäuseanordnung (1) angeordnet sind, und wobei eine Anschlagfläche an der Stirnfläche (25) des betreffenden axialen Endes (19) des Schieberkolbens (5) gebildet ist, **dadurch gekennzeichnet, dass** die Gegenanschläge (31, 59) lageeinstellbar sind und dass der Gegenanschlag (31) für die an der Stirnfläche (25) des Schieberkolbens (5) befindliche Anschlagfläche an einer Stellschraube (29) gebildet ist, die sich im zugeordneten Endteil (11) der Gehäuseanordnung (1) parallel zur Verfahrachse (7) erstreckt und von der Gehäuseaußenseite her zugänglich ist.

2. Ventileinrichtung nach Anspruch 1, **dadurch gekennzeichnet, dass** der Schieberkolben (5) an dem betreffenden axialen Endbereich (19) eine Vertiefung (43) aufweist und dass die zweite Anschlagfläche durch eine zwischen dem Grund der Vertiefung (43) und dem Außenumfang des Schieberkolbens (5) verlaufende Wandfläche (47) der Vertiefung (43) gebildet ist.

3. Ventileinrichtung nach Anspruch 1 oder 2, **dadurch gekennzeichnet, dass** der Gegenanschlag für die zweite Anschlagfläche (47) durch eine Stufenfläche (59) zwischen dem Schaft (51) einer zweiten Stellschraube (49) und deren für den Eingriff in die Vertiefung (43) vorgesehenen, radial erweiterten Kopfteil (57) gebildet ist.

4. Ventileinrichtung nach einem der vorstehenden Ansprüche, **dadurch gekennzeichnet, dass** die zweite Stellschraube (49) parallel zur Verfahrachse (7) im zugeordneten Endbereich (11) der Gehäuseanordnung (1) neben der ersten Stellschraube (29) angeordnet und wie diese von der Gehäuseaußenseite her zugänglich ist.

5. Ventileinrichtung nach einem der vorstehenden Ansprüche, **dadurch gekennzeichnet, dass** die Vertiefung des Schieberkolbens (5) durch eine sich entlang der Verfahrachse (7) erstreckende Längsnut (43) gebildet ist.

6. Ventileinrichtung nach einem der vorstehenden Ansprüche, **dadurch gekennzeichnet, dass** im Schieberkolben (5) eine Quernut (67) ausgebildet ist, die in die Längsnut (43) derart einmündet, dass die Quernut (67) bei Drehung des Schieberkolbens (5) für das Kopfteil (57) der zweiten Stellschraube (49) einen Ausgang aus der Längsnut (43) bildet, und dass eine Unterbrechung der Wand der Quernut (67) einen zur Stirnfläche (25) des Schieberkolbens (5) führenden weiteren Ausgang für das Kopfteil (57) der zweiten Stellschraube (49) bildet.

7. Ventileinrichtung nach einem der vorstehenden Ansprüche, **dadurch gekennzeichnet, dass** zur Bildung der Unterbrechung der Wand der Quernut (67) am Schieberkolben (5) eine ebene, entlang einer Sehne am Umfang des Schieberkolbens (5) verlaufende Abschrägung (69) vorgesehen ist.

8. Ventileinrichtung nach einem der vorstehenden Ansprüche, **dadurch gekennzeichnet, dass** im Schieberkolben (5) eine vom Boden der Quernut (67) aus sich radial nach innen erstreckende Ausnehmung (75) für den Eingriff eines Mitnehmerelements (77) einer Einrichtung (79, 81) zur manuellen Erzeugung von Verfahrbewegungen vorgesehen ist.

9. Ventileinrichtung nach einem der vorstehenden Ansprüche, **dadurch gekennzeichnet, dass** an der Gehäuseanordnung (1) eine Führungseinrichtung (71, 73) für den Schieberkolben (5) derart angeordnet ist, dass sie diesen nur bei Axialpositionen, die dem betrieblichen Arbeitshubbereich entsprechen, gegen Rotation sichert.

## Claims

1. Hydraulic valve device, especially an LS directional control valve, with fluid connections provided in a housing arrangement (1), such as at least one pressure supply connection (P), at least one service connection (A, B) and preferably one load sensing connection, and with a control device (5), which can be moved in one or the other direction of motion to at least partially control fluid connections in the housing arrangement (1), an adjustable stop device (25, 31, 47, 59) being provided to restrict the stroke length of the travel movements of the control device (5) or parts thereof in the one direction and in the other direction, the stop device (25, 31, 47, 59) comprising a stop face (25) facing the one direction of motion and a second stop face (47) facing the other direction of motion on the same axial end region (19) of a sliding piston (5) of the control device, a counterstop (31, 59) being provided for each stop face (25, 47), both of these being arranged on the respective same end region (11) of the housing arrangement (1), and a stop face being formed on the end face (25) of the respective axial end (19) of the sliding piston (5), **characterised in that** the position of the counterstops (31, 59) can be adjusted and **in that** the counterstop (31) for the stop face located on the end face (25) of the sliding piston (5) is formed on an adjustment screw (29), which extends parallel with the axis of travel (7) in the associated end portion (11) of the housing arrangement (1) and is accessible from the outer side of the housing.

2. Valve device according to claim 1, **characterised in that** the sliding piston (5) comprises a depression (43) on the respective axial end region (19) and **in that** the second stop face is formed by a wall face (47) of the depression (43) running between the base of the depression (43) and the outer circumference of the sliding piston (5).

3. Valve device according to either claim 1 or claim 2, **characterised in that** the counterstop for the second stop face (47) is formed by a step face (59) between the shaft (51) of a second adjustment screw (49) and its radially extended top portion (57) which is provided to engage in the depression (43).

4. Valve device according to any one of the preceding claims, **characterised in that** the second adjustment screw (49) is arranged parallel with the axis of travel (7) in the associated end region (11) of the housing arrangement (1) next to the first adjustment screw and is similarly accessible from the outer side of the housing.

5. Valve device according to any one of the preceding claims, **characterised in that** the depression of the sliding piston (5) is formed by a longitudinal groove (43) extending along the axis of travel (7).

6. Valve device according to any one of the preceding claims, **characterised in that** a transverse groove (67) is formed in the sliding piston (5), said groove leading into the longitudinal groove (43) in such a way that, when the sliding piston (5) is rotated, the transverse groove (67) forms an outlet from the longitudinal groove (43) for the top portion (57) of the second adjustment screw (49), and **in that** a break in the wall of the transverse groove (67) forms another outlet, leading to the end face (25) of the sliding piston (5) for the top portion (57) of the second adjustment screw (49).

7. Valve device according to any one of the preceding claims, **characterised in that** a flat bevel (69) running along a chord on the circumference of the sliding piston (5) is provided to form the break in the wall of the transverse groove (67) on the sliding piston (5).

8. Valve device according to any one of the preceding claims, **characterised in that** a recess (75) extending radially inwards from the base of the transverse groove (67) is provided in the sliding piston to engage with a carrier element (77) of a device (79, 81) to manually produce travel movements.

9. Valve device according to any one of the preceding claims, **characterised in that** a guide device (71, 73) for the sliding piston (5) is arranged on the housing arrangement (1) such that said guide device only prevents said sliding piston from rotating in axial positions corresponding to the operational working stroke region.

## Revendications

1. Dispositif de vanne hydraulique, notamment vanne à canaux LS, comprenant des raccords de fluide prévus sur un agencement (1) de corps, comme au moins un raccord (P) d'alimentation en pression, au moins un raccord (A, B) utile et de préférence un raccord d'indication de charge, et comprenant un dispositif (5) de commande, qui, pour commander au moins en partie des raccords de fluide de l'agencement (1) de corps, peut être déplacé dans l'un ou l'autre sens de déplacement, dans lequel il y a un dispositif (25, 31, 47, 59) de butée réglable délimitant la longueur de course des mouvements de déplacement du dispositif (5) de commande ou de parties de celui-ci dans le un sens et dans l'autre, le dispositif (25, 31, 47, 59) de butée ayant, à la même partie (19) d'extrémité axiale d'un piston (5) coulissant du dispositif de commande, une surface (25) de butée tournée vers le un sens du mouvement et une deuxième surface (47) de butée tournée vers l'autre sens du mouvement, dans lequel il est prévu, pour chaque surface (25, 47) de butée, une contre-butée (31, 59), qui sont disposées toutes deux à la même partie (11) d'extrémité concernée de l'agencement (1) de corps, une surface de butée étant formée à la surface (25) frontale de l'extrémité (19) axiale concernée du piston (5) coulissant, **caractérisé en ce que** les contre-butées (31, 59) sont réglables en position et **en ce que** la contre-butée (31), pour la surface de butée se trouvant à la surface (25) frontale du piston (5) coulissant, est formée sur une vis (29) de réglage, qui, à la partie (11) d'extrémité associée de l'agencement (1) de corps, s'étend parallèlement à l'axe (7) de déplacement et est accessible depuis le côté extérieur du corps.

2. Dispositif de vanne suivant la revendication 1, **caractérisé en ce que** le piston (5) coulissant a, à la partie (19) d'extrémité axiale concernée, une cavité (43) et **en ce que** la deuxième surface de butée est formée par une surface (47) de paroi de la cavité (43) s'étendant entre le fond de la cavité (43) et le pourtour extérieur du piston (5) coulissant

3. Dispositif de vanne suivant la revendication 1 ou 2, **caractérisé en ce que** la contre-butée pour la deuxième surface (47) de butée est formée par une surface (59) étagée entre le fût (51) d'une deuxième vis (49) de réglage et sa partie (57) de tête s'élargissant radialement prévue pour pénétrer dans la cavité (43).

4. Dispositif de vanne suivant l'une des revendications précédentes, **caractérisé en ce que** la deuxième vis (49) de réglage est parallèle à l'axe (7) de déplacement dans la partie (11) d'extrémité associée de l'agencement (1) du corps, à côté de la première vis (29) de réglage, et est accessible, comme celle-ci, depuis le côté extérieur du corps.

5. Dispositif de vanne suivant l'une des revendications précédentes, **caractérisé en ce que** la cavité du piston (5) coulissant est formée par une rainure (43) longitudinale s'étendant le long de l'axe (7) de déplacement

6. Dispositif de vanne suivant l'une des revendications précédentes, **caractérisé en ce qu'**il est constitué, dans le piston (5) coulissant, une rainure (67) transversale, qui débouche dans la rainure (43) longitudinale de manière à ce que la rainure (67) transversale forme, lors de la rotation du piston (5) coulissant, pour la partie (57) de tête de la deuxième vis (49) de réglage, une sortie de la rainure (43) longitudinale et **en ce qu'**une interruption de la paroi de la rainure (67) transversale forme une autre sortie, menant à la surface (25) frontale du piston (5) coulissant, pour la partie (57) de tête de la deuxième vis (49) de réglage.

7. Dispositif de vanne suivant l'une des revendications précédentes, **caractérisé en ce que**, pour former l'interruption de la paroi de la rainure (67) transversale du piston (5) coulissant, il est prévu un biseau (69) plan s'étendant le long d'une corde sur le pourtour du piston (5) coulissant.

8. Dispositif de vanne suivant l'une des revendications précédentes, **caractérisé en ce qu'**il est prévu, dans le piston (5) coulissant, un évidement s'étendant radialement vers l'intérieur depuis le fond de la rainure (67) transversale, pour la pénétration d'un élément (77) d'entraîneur d'un dispositif (79, 81) de production manuelle de mouvements de déplacement.

9. Dispositif de vanne suivant l'une des revendications précédentes, **caractérisé en ce que**, sur l'agencement (1) de corps, est disposé un dispositif (71, 73) de guidage du piston (5) coulissant, de manière à n'en empêcher la rotation qu'en des positions axiales, qui correspondent à la plage de course de travail en fonctionnement.
